# EUROPEAN PATENT APPLICATION

(11) **EP 4 621 946 A1**
(43) Date of publication of application: **24.09.2025**
(21) Application number: 24872651.5
(22) Date of filing: 17.06.2024
(51) Int. Cl.: H01M 50/14, H01M 50/141, H01M 50/131, H01M 50/121, H01M 50/105, B32B 5/02, B32B 27/28

(54) **FILM AND BATTERY POUCH COMPRISING SAME**

(30) Priority: 27.09.2023 KR 20230130975
(71) Applicant: LG Energy Solution, Ltd., Seoul 07335 (KR)
(72) Inventor: LEE, Byoungsoo, Daejeon 34122 (KR); LIM, Yeji, Daejeon 34122 (KR); CHOI, Nakhee, Daejeon 34122 (KR)
(74) Representative: Plasseraud IP
(86) International application number: PCT/KR2024/008309
(87) International publication number: WO 2025/070939

(57) **Abstract**

The present invention can provide a film with excellent durability against an electrolyte, capable of effectively blocking the inflow of external moisture and atmosphere (air) into a battery while continuously and non-destructively discharging gas, generated inside the battery, under a low pressure condition as well as a high pressure condition. The present invention can provide a battery pouch capable of further improving the stability and lifespan of the battery by comprising the film in at least a portion thereof.

## Description

### Technical Field

This disclosure relates to a film and a pouch for a battery including the same.

### Background Art

Pouch-type batteries are attracting much attention because they have high energy density per weight, are inexpensive, are easy to modify, and may be stacked with a high degree of integration.

Because the pouch-type batteries use flexible exterior materials, improving safety is a main research task. Particularly, lithium secondary batteries are subject to the swelling phenomenon in which a battery swells due to abnormal operating conditions such as the decomposition of an electrolyte solution, internal short circuit, overcharge conditions exceeding allowed current and voltage, exposure to high temperatures, and deformation due to dropping or external shock. If the amount of gas generation continues to increase (continuous swelling phenomenon occurs), damage to the external (the formation of a hole) of the battery pouch may occur due to the deformation of the pouch, which may result in ignition or an explosion.

Accordingly, it is required to introduce a device that may exhaust the gas generated in the batteries to the outside. In one example, Patent Document 1 discloses a battery that may ensure quality and stability by maintaining the sealability of a pouch-type battery under normal circumstances and enabling rapid venting in the event of a mishap, by forming a venting hole in a pouch case for exhausting gas from inside the pouch, and covering the venting hole with a venting cover that is opened if the gas pressure in the case reaches a threshold value. However, the battery according to Patent Document 1 has defects in terms of not being reusable after the venting cover is vented, not including other alternative elements that may prevent accidents in cases where the venting cover is not properly vented for unexpected reasons in the event of a mishap, and not taking into account issues involving external moisture or the atmosphere entering through the venting cover.

### [Patent Document]

(Patent Document 1) Korean Laid-open Patent Publication No. 2015-0034498

### Summary

### Technical Goals

The present disclosure provides a film that may continuously and non-destructively exhaust gas generated in a secondary battery under not only high-pressure conditions but also low-pressure conditions, while effectively blocking external moisture and the atmosphere (air) from entering the secondary battery, and have excellent tolerance to an electrolyte solution.

The present disclosure also provides a pouch for a battery, which may further improve the stability and lifespan of a secondary battery by including the film in at least a portion thereof.

### Technical solutions

An aspect of the present disclosure may be related to a film with different gas permeability properties on both sides in order to exhaust gas generated in a secondary battery to an outside and prevent external air and water vapor from permeating into an inside of the secondary battery. The film includes a protective layer, an active layer and a support layer from a side in contact with the inside of the secondary battery. The protective layer includes an amorphous perfluorinated polymer to have a tolerance to an electrolyte solution of the secondary battery. Under relative pressure value of 20 pound-force per square inch (psi) conditions, a ratio of a forward direction permeability of the gas generated in the secondary battery to a reverse direction permeability of air is 20 or more, where the forward direction is a direction from the inside of the secondary battery to the outside of the secondary battery, and the reverse direction is a direction from the outside of the secondary battery to the inside of the secondary battery.

In an aspect, the film of the present disclosure may have, under relative pressure value of 20 psi conditions, the forward direction permeability of the gas generated in the secondary battery of 5 gas production unit (GPU) or more, under relative pressure value of 40 psi conditions, the forward direction permeability of the gas generated in the secondary battery of 10 GPU or more, or under relative pressure value of 50 psi conditions, the forward direction permeability of the gas generated in the secondary battery of 15 GPU or more.

In an aspect, the film of the present disclosure may have, under relative pressure value of 15 psi conditions, the reverse direction permeability of the air of 0.1 GPU or less, under relative pressure value of 20 psi conditions, the reverse direction permeability of the air of 0.5 GPU or less, or under relative pressure value of 60 psi conditions, the reverse direction permeability of the air of 1 GPU or less.

In an aspect, the protective layer may further include at least one of polyimide, Nafion or polydimethylsiloxane.

In an aspect, the protective layer may have a contact angle with respect to the electrolyte solution of a secondary battery of 30° or more.

In an aspect, the active layer may absorb the gas generated in the secondary battery and deliver the gas to an outside direction.

In an aspect, the active layer may include a crosslinked structure of cellulose and a compound including two or more carboxylic acids.

In an aspect, the crosslinked structure of cellulose and a compound including two or more carboxylic acids may be represented by a Formula 1 below.

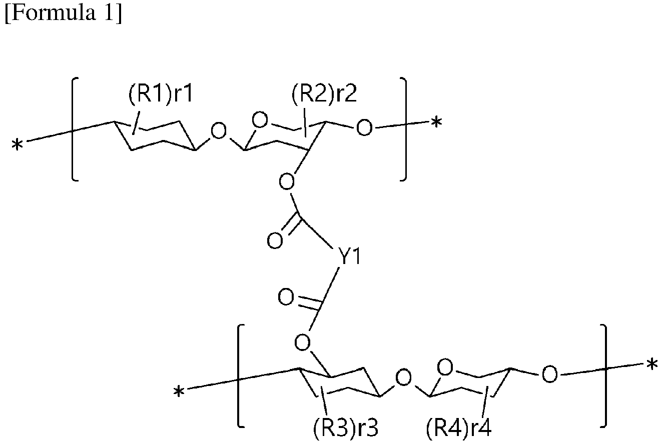

In Formula 1 above, R1 to R4 may be the same or different and may be each independently hydrogen, deuterium, a hydroxyl group, a substituted or unsubstituted alkyl group, or a substituted or unsubstituted alkoxy group; Y1 may be a direct linkage, a substituted or unsubstituted alkylene group, a substituted or unsubstituted alkenylene group, or a substituted or unsubstituted arylene group, or a combination of substituents selected from the group consisting of a direct linkage, a substituted or unsubstituted alkylene group, a substituted or unsubstituted alkenylene group, and a substituted or unsubstituted arylene group; r1 may be an integer of from 1 to 10, where if r1 is 2 or more, R1 may be the same as or different from each other; r2 may be an integer of from 1 to 7, where if r2 is 2 or more, R2 may be the same as or different from each other; r3 may be an integer of from 1 to 9, where if r3 is 2 or more, R3 may be the same as or different from each other; and r4 may be an integer of from 1 to 8, where if r4 is 2 or more, R4 may be the same as or different from each other.

In an aspect, R1 to R4 may be the same or different and may be each independently a substituted or unsubstituted methyl group.

In an aspect, the support layer may have a tensile strength of from 0.1 to 10 kilogram-force per square millimeter (kgf/mm²).

In an aspect, the support layer may include a porous support.

In an aspect, the porous support may have a nonwoven fabric form in which polymer fibers are irregularly entangled, a woven form or a mesh form.

In an aspect, the support layer may include a polymer coating layer on at least one side of the porous support.

In an aspect, the polymer coating layer may include one or more of polysulfone, polyethersulfone, polycarbonate, polyethylene oxide, polyimide, polyetherimide, polyetheretherketone, polypropylene, polymethylpentene, polymethyl chloride, or polyvinylidene fluoride.

In an aspect, a gutter layer may be included on at least one side of the support layer.

In an aspect, gutter layers may be included on both sides of the support layer.

In an aspect, each of the gutter layers may independently include polydimethylsiloxane.

In an aspect, a water contact angle of an outermost layer of the film may be 80° to 120°, the outermost layer being in contact with the external air.

Another aspect of the present disclosure may be related to a pouch for a battery. The pouch includes the film in at least a portion thereof, wherein gas generated in the secondary battery is non-destructively exhausted through the film to the outside.

### Effects

The present disclosure may provide a film that may continuously and non-destructively exhaust gas generated in a battery under not only high-pressure conditions but also low-pressure conditions, while effectively blocking external moisture and the atmosphere (air) from entering through the battery, and have excellent tolerance to an electrolyte solution. The present disclosure may provide a pouch for a battery, which may further improve the stability and lifespan of a battery by including the film in at least a portion thereof.

### Description of Drawings

FIG. 1 shows an exemplary structure of a film according to the present disclosure.
FIG. 2 shows another exemplary structure of a film according to the present disclosure.
FIG. 3 shows still another exemplary structure of a film according to the present disclosure.
FIG. 4 shows an exemplary structure of a support layer of the present disclosure.
FIG. 5 shows images of the evaluation results on the tolerance of the surfaces of protective layers from an example and a comparative example to electrolyte solution.
FIG. 6 is an image of a depth direction structure of a film according to the present disclosure, observed using a confocal laser scanning microscope (CLSM).
FIG. 7 shows images showing evaluation results on the water contact angles of the outermost layers of the films of an example and a comparative example.

### Detailed Description

Terms or words used in this specification and claims should not be construed as limited to their common or dictionary meanings, and it should be interpreted as meaning and concept consistent with the technical idea of the present disclosure based on the principle that the inventor may appropriately define the concept of terms in order to explain his or her invention in the best way.

Therefore, it is understood that the configuration of an aspect described in this specification is one of the most preferred aspects of the present disclosure and does not represent the entire technical idea of the present disclosure, so various equivalents and modification examples that can replace the aspects at the time of filing the present application may exist.

In the specification, singular expressions include plural expressions unless the context clearly indicates otherwise.

In the specification, if a part "includes" a certain element, it means that the part may further include other elements rather than excluding other elements, unless specifically stated to the contrary. Accordingly, for example, a composition including compound A may include compounds other than A. However, in certain aspects, the term "including" also encompasses more limited meanings "of consisting essentially/inherently of" and "consisting of," and for example, "a composition including compound A" may also consist (essentially/inherently) of compound A.

In connection with this, as used in the specification, it should be understood that terms such as "being provided with" or "having" are intended to designate the presence of implemented features, numbers, operations, components, or combinations thereof, but not exclude in advance the possibility of the presence or addition of one or more other features, numbers, operations, components, or combinations thereof.

In the specification, if an arbitrary member is located "on" another arbitrary member, not only a case where such member is in contact with another member, but also a case where another member or substance exists between the two members are included.

If amounts, concentrations, or other values or parameters are given as listings of ranges, desirable ranges, desirable upper limits and desirable lower limits in this specification, it is to be understood that all ranges that may be formed from any pair of any upper range limits or desirable values and any lower range limits or desirable values, are specifically disclosed, regardless of whether the range is separately disclosed. If a range of numeric values is referred to in the specification, unless otherwise stated, for example, unless there is a limited term such as greater than and less than, the range is intended to include the endpoint values and all integers and fractions within the range. The scope of the present disclosure is not intended to be limited to the specific values referred to when defining a range.

Among the physical properties referred to in the specification, in cases where the measurement temperature affects the relevant physical properties, unless otherwise specified, the physical properties are measured at room temperature. The term room temperature is a natural temperature that is not heated or reduced, and may mean, for example, any temperature in a range of about 10 degrees Celsius (°C) to 30°C, about 23°C, or about 25°C. Additionally, unless otherwise specified, the unit of the temperature in the specification is °C.

In addition, among the physical properties referred to in the specification, in cases where the measurement pressure affects the relevant physical properties, unless otherwise specified, the physical properties are measured at normal pressure, that is, atmospheric pressure (about 1 atm).

An aspect of the present disclosure relates to a film with different gas permeability properties on both sides in order to exhaust gas generated in a secondary battery to the outside and prevent external air and water vapor from permeating into the inside of the secondary battery, wherein the film includes a protective layer, an active layer and a support layer from a side in contact with the inside of the secondary battery, the protective layer includes an amorphous perfluorinated polymer and has a tolerance to an electrolyte solution of the secondary battery, and under relative pressure value of 20 pound-force per square inch (psi) conditions, a ratio of a forward direction permeability of the gas generated in the secondary battery to a reverse direction permeability of air is 20 or more, where the forward direction is a direction from the inside of the secondary battery to the outside of the secondary battery, and the reverse direction is a direction from the outside of the secondary battery to the inside of the secondary battery.

In the specification, "inside the secondary battery" may refer to a space where an electrode assembly and an electrolyte solution are positioned, bordering a case containing the electrode assembly and the electrolyte solution, and "outside the secondary battery" refers to a space bordering the case and may mean a space other than the inside. The case may be a cylindrical can, a prismatic can, or a pouch, and in detail, may be a pouch.

The amorphous perfluorinated polymer may be, for example, one or more selected from the group consisting of poly(tetrafluoroethylene-co-2,2,4-trifluoro-5-trifluoromethoxy-1,3-dioxole) and polytetrafluoroethylene.

The amorphous perfluorinated polymer may have, for example, a mole weight in a range of 100 to 1000 grams per mole (g/mol). In another example aspect, the amorphous perfluorinated polymer may have a mole weight of 150 g/mol or more, 200 g/mol or more, 250 g/mol or more or 300 g/mol or more, or 900 g/mol or less, 800 g/mol or less, 700 g/mol or less, 600 g/mol or less, 500 g/mol or less, or 400 g/mol or less.

The film of the present disclosure may include, for example, a protective layer, an active layer and/or a support layer from a side in contact with the inside of a secondary battery. Each of the layers may be formed in direct contact with an adjacent layer, or in indirect contact via another layer therebetween.

The film of the present disclosure may have a tolerance to the electrolyte solution of a secondary battery because the protective layer includes, for example, an amorphous perfluorinated polymer.

In the specification, "a film has a tolerance to the electrolyte solution of a secondary battery" means that a side of the film in contact with the inside of the secondary battery does not dissolve even though initially exposed or exposed for a considerable period of time to the electrolyte solution and/or vapor derived therefrom, or not absorb or permeate the same.

The film of the present disclosure may have, for example, under relative pressure value of 20 psi conditions, a ratio of a forward direction permeability of the gas generated in the secondary battery to a reverse direction permeability of air of 20 or more. The film of the present disclosure may have, in another example aspect, under relative pressure value of 20 psi conditions, a ratio of a forward direction permeability of the gas generated in the secondary battery to a reverse direction permeability of air of 25 or more, 30 or more or 35 or more, or 100 or less, 90 or less or 80 or less.

The film of the present disclosure may have, under relative pressure value of 20 psi conditions, the forward direction permeability of the gas generated in the secondary battery of 5 gas production unit (GPU) or more. In the present specification, gas permeation properties may be measured by a method according to an evaluation example shown later. In the present specification, a relative pressure value may mean a pressure value based on an atmospheric pressure of 0 psi. In another example aspect, the film of the present disclosure may have, under relative pressure value of 20 psi conditions, the forward direction permeability of the gas generated in the secondary battery of 6 GPU or more or 7 GPU or more, or 15 GPU or less, 10 GPU or less, 9 GPU or less or 8 GPU or less.

The film of the present disclosure may have, for example, under relative pressure value of 40 psi conditions, the forward direction permeability of the gas generated in the secondary battery of 10 GPU or more. In another example aspect, under relative pressure value of 40 psi conditions, the film of the present disclosure may have a forward direction permeability of the gas generated in the secondary battery of 11 GPU or more, 12 GPU or more, 13 GPU or more, 14 GPU or more or 15 GPU or more, or 20 GPU or less, 19 GPU or less, 18 GPU or less, 17 GPU or less or 16 GPU or less.

The film of the present disclosure may have, for example, under relative pressure value of 50 psi conditions, the forward direction permeability of the gas generated in the secondary battery of 15 GPU or more. In another example aspect, the film of the present disclosure may have, under relative pressure value of 50 psi conditions, the forward direction permeability of the gas generated in the secondary battery of 16 GPU or more, 17 GPU or more or 18 GPU or more, or 25 GPU or less, 24 GPU or less, 23 GPU or less, 22 GPU or less, 21 GPU or less or 20 GPU or less.

The film of the present disclosure may have, for example, under relative pressure value of 15 psi conditions, the reverse direction permeability of the air of 0.1 GPU or less.

The film of the present disclosure may have, for example, under relative pressure value of 20 psi conditions, the reverse direction permeability of the air of 0.5 GPU or less. In another example aspect, the film of the present disclosure may have, under 20 psi conditions, the reverse direction permeability of the air of 0.4 GPU or less, 0.3 GPU or less or 0.2 GPU or less.

The film of the present disclosure may have, for example, under relative pressure value of 60 psi conditions, the reverse direction permeability of the air of 1 GPU or less. In another example aspect, the film of the present disclosure may have, under relative pressure value of 60 psi conditions, the reverse direction permeability of the air of 0.9 GPU or less, 0.8 GPU or less or 0.7 GPU or less.

The present disclosure may provide a film that may continuously and non-destructively exhaust gas generated inside a secondary battery not only under high-pressure conditions greater than 20 psi but also under low-pressure conditions of 20 psi or less, while effectively blocking external moisture and the atmosphere (air) from entering the battery, and have excellent a tolerance to an electrolyte solution. In the present disclosure, the high-pressure conditions refer to pressure conditions in which at least a portion of a secondary battery case is broken, and considerable risk of ignition or explosion is induced, and may refer to pressures, for example, greater than 20 psi, greater than 50 psi or greater than 100 psi. The low-pressure conditions may mean a range of 20 psi or less, which is greater than the atmospheric pressure, while exhausting gas generated inside a secondary battery to the outside, and may have a relatively low risk of case breakage.

The protective layer may further include at least one of polyimide, Nafion or polydimethylsiloxane. If the protective layer further includes at least one of polyimide, Nafion or polydimethylsiloxane, the weight ratio of at least one of polyimide, Nafion or polydimethylsiloxane to the amorphous perfluorinated polymer may be, for example, in a range of 0.1 to 20, and in another aspect, 0.1 or more, 0.2 or more, 0.3 or more, 0.4 or more, 0.5 or more, 0.6 or more, 0.7 or more, 0.8 or more, 0.9 or more, 1 or more, 2 or more, 3 or more, 4 or more or 5 or more, or 18 or less, 16 or less, 14 or less, 12 or less, 10 or less or 6 or less. Since the protective layer of the present disclosure further includes at least one of polyimide, Nafion or polydimethylsiloxane, gas permeation properties may be further improved, or defects such as pin holes may be further controlled.

The protective layer may have, for example, a contact angle with respect to the electrolyte solution of a secondary battery of 30° or more. In the present specification, the "contact angle with respect to the electrolyte solution of a secondary battery" may refer to an initial contact angle and/or a contact angle after exposure to the electrolyte solution for a certain period of time. The electrolyte solution contact angle may be measured in a manner according to an evaluation example shown later. In another example aspect, the protective layer may have a contact angle with respect to the electrolyte solution of a secondary battery of 35° or more, 40° or more or 45° or more, or 80° or less, 75° or less, 70° or less, 65° or less, 60° or less or 55° or less.

The thickness of the protective layer may be, for example, 10 micrometers (µm) or less. In another aspect, the thickness of the protective layer may be 9 µm or less, 8 µm or less, 7 µm or less, 6 µm or less, 5 µm or less, 4 µm or less, 3 µm or less, 2 µm or less or 1 µm or less, or 0.01 µm or more, 0.05 µm or more or 0.1 µm or more, but is not limited thereto. In the present specification, the "thickness of A layer" may mean the thickness of the A layer itself or may mean, for example, if the A layer overlaps with another layer, a thickness measured including the overlapped portion of the A layer with another layer. In the present specification, the "thickness" may be an average thickness of thicknesses measured at optional positions, the maximum thickness and/or the minimum thickness.

Since the film of the present disclosure includes the protective layer above at the innermost layer of the film, the tolerance of the film to the electrolyte solution may be further improved. In the present specification, the "innermost layer of the film" may refer to a side that is in contact with the inside of the secondary battery among the layers of the film.

The film of the present disclosure may include, for example, an active layer. The active layer may be formed on, for example, a side opposite to the side where the protective layer is in contact with the inside of the secondary battery.

The active layer may, for example, absorb gas generated in the secondary battery and deliver the gas to the outside direction. The gas may include, for example, gas generated while forming a solid electrolyte interphase (SEI) film during the formation process of a secondary battery, and/or gas abnormally generated due to the decomposition of an electrolyte solution, the excessive moisture content in the secondary battery, short circuit, overcharging and/or over discharging. The specific composition of the gas may differ depending on the combination of an electrolyte, a solvent in an electrolyte solution, a positive electrode active material, a negative electrode active material and a binder, used in the secondary battery, but usually exhibit similar properties in that CO₂ is a main component. The gas may include: H₂; O₂; CO; CO₂; and/or hydrocarbon gases such as CH₄, C₂H₂, C₂H₄, C₂H₆, C₃H₆, and C₃H₈; and a combination thereof, and the ratio of CO₂ gas to the total gas generated may be 50% or more. As the film of the present disclosure includes the active layer with the properties described later, the gas generated in the secondary battery may be permeated in a forward direction (from the inside to the outside direction of the film) through a solution-diffusion mechanism.

The active layer may include, for example, a crosslinked structure of cellulose and a compound containing two or more carboxylic acids. In the present disclosure, a space between the cellulose polymer chains of the active layer may be maintained constant, and the packing density and arrangement of the polymer may be improved, thereby exhibiting the above-described function more effectively.

The crosslinked structure of cellulose and a compound containing two or more carboxylic acids may be represented by, for example, Formula 1 below.

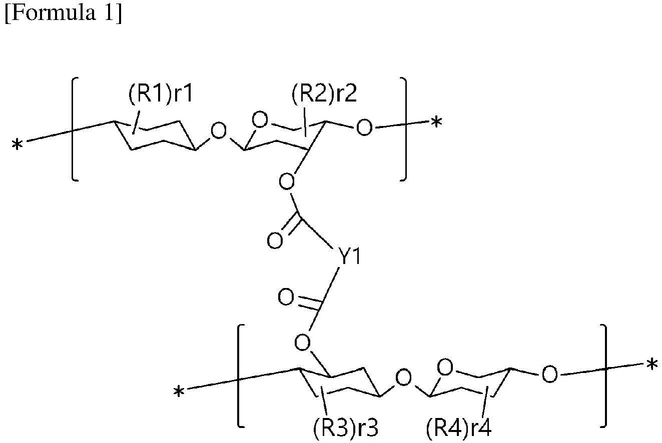

In Formula 1, R1 to R4 may be the same or different and may be each independently hydrogen, deuterium, a hydroxyl group, a substituted or unsubstituted alkyl group, or a substituted or unsubstituted alkoxy group; Y1 may be a direct linkage, a substituted or unsubstituted alkylene group, a substituted or unsubstituted alkenylene group or a substituted or unsubstituted arylene group, or a combination of substituents selected from the group consisting of a direct linkage, a substituted or unsubstituted alkylene group, a substituted or unsubstituted alkenylene group and a substituted or unsubstituted arylene group; r1 may be an integer of 1 to 10, where if r1 is 2 or more, R1 may be the same as or different from each other; r2 may be an integer of 1 to 7, where if r2 is 2 or more, R2 may be the same as or different from each other; r3 may be an integer of 1 to 9, where if r3 is 2 or more, R3 may be the same as or different from each other; and r4 may be an integer of 1 to 8, where if r4 is 2 or more, R4 may be the same as or different from each other. From the viewpoint of achieving the purpose of exhausting the gas generated inside the secondary battery to the outside, while preventing external air and/or water vapor from permeating into the secondary battery, R1 to R4 may desirably be each independently a substituted or unsubstituted methyl group.

The thickness of the active layer may be, for example, 10 µm or less. In another example aspect, the thickness of the active layer may be 9 µm or less, 8 µm or less, 7 µm or less, 6 µm or less, 5 µm or less, 4 µm or less, 3 µm or less, 2 µm or less or 1 µm or less, or 0.01 µm or more, 0.05 µm or more or 0.1 µm or more, but is not limited thereto.

The film of the present disclosure may include, for example, a support layer.

The support layer may have a tensile strength of, for example, 0. 1 to 10 kilogram-force per square millimeter (kgf/mm²). If the support layer has the tensile strength, the film of the present disclosure may have excellent mechanical strength.

The support layer may include, for example, a porous support. The porous support may have, for example, a nonwoven fabric form in which polymer fibers are irregularly entangled, a woven form or a mesh form. The polymer may be, for example, polypropylene (PP), poly(methyl methacrylate) (PMMA), polyethylene (PE), polyethylene terephthalate (PET) and polyether sulfone (PES), but is not limited thereto.

The thickness of the porous support layer may be, for example, 50 to 150 µm, but is not limited thereto. In another example aspect, the thickness of the porous support may be 60 µm or more, 70 µm or more, 80 µm or more or 90 µm or more, or 140 µm or less, 130 µm or less, 120 µm or less, 110 µm or less or 100 µm or less.

The porosity of the porous support may be 10 to 90 percents (%), but is not limited thereto. The porosity may be measured by the Archimedes principle. In another example aspect, the porosity of the porous support may be 20% or more, 30% or more, 40% or more, 50% or more, 60% or more, 70% or more or 80% or more, or 80% or less, 70% or less, 60% or less, 50% or less, 40% or less, 30% or less, or 20% or less.

The support layer may include, for example, a polymer coating layer on at least one side of the porous support. The polymer coating layer may be formed on one side or both sides of the porous support.

The polymer coating layer may include, for example, one or more selected from the group consisting of polysulfone, polyethersulfone, polycarbonate, polyethylene oxide, polyimide, polyetherimide, polyetheretherketone, polypropylene, polymethylpentene, polymethyl chloride, polyvinylidene fluoride and a combination thereof.

The thickness of the support layer may be, for example, 1 to 1000 µm.

Since the present disclosure includes the support layer as described above, the shape of the film may be maintained, target mechanical strength may be obtained, and the overall gas permeability properties of the film may not be deteriorated.

The film of the present disclosure may include, for example, a gutter layer on at least one side of the support layer. From the viewpoint of maintaining the shape of the film, the gutter layer may desirably be included between the active layer and the support layer, and from the viewpoint of maintaining the shape of the film and blocking external air or water vapor, the gutter layers may be more desirably included on both sides of the support layer.

Each of the gutter layers may independently include, for example, polydimethylsiloxane. The polydimethylsiloxane may be included in 90 percents by weight (wt%) or more, 95 wt% or more, 99 wt% or more or 100 wt% based on the dry weight with respect to the gutter layer.

The thickness of the gutter layer may be, for example, 10 micrometers (µm) or less. If gutter layer is formed on both sides of the support layer, the thickness of the gutter layer may mean the thickness of each gutter layer or the sum of the thicknesses of each gutter layer.

The outermost layer of the film in contact with the external air may have, for example, a water contact angle of 80° to 120°. The water contact angle of the outermost layer of the film may be measured according to an evaluation example described later. In another example aspect, the water contact angle of the outermost layer of the film may be 85° or more, 90° or more or 95° or more, or 115° or less, 110° or less or 105° or less. By controlling the water contact angle of the outermost layer of the film as described above, external moisture and/or air may be more effectively blocked without inhibiting the exhaustion of internally generated gas in the present disclosure.

In the present disclosure, each of the above-described layers, for example, the protective layer, the active layer, the support layer, and/or the gutter layer, may or may not overlap with adjacent layers. In an example aspect, at least a portion of the protective layer may or may not overlap with the active layer. In another example aspect, at least a portion of the gutter layer may or may not overlap with the support layer or the active layer.

Another aspect of the present disclosure relates to a pouch for a battery, in which the film is included in at least a portion thereof, wherein gas generated inside a secondary battery is non-destructively exhausted through the film to the outside.

Contents regarding the above-described film may be equally applied to the disclosure relating to the pouch for a battery of the present disclosure, unless otherwise specifically stated.

Generally, a venting system has been introduced to solve defects on the increase in gas generation due to abnormal operation of a battery, resulting in ignition or explosion. A venting system is, for example, a device that allows the internal gas to be exhausted to the outside when an internal pressure of a secondary battery reaches a certain level. However, it is difficult to reuse the secondary battery after venting, and there was a lack of a stability enhancement system that may be considered as an alternative in case where the venting system did not work properly for unforeseen reasons. However, according to the present disclosure, by including the film as above in at least a portion of a pouch for a battery, the gas generated inside the battery may be continuously and non-destructively exhausted under not only high-pressure conditions but also low-pressure conditions, thereby further improving the lifespan, tolerance and stability of the battery. Additionally, by applying the film to a battery in combination with an existing venting system, the effect may be further improved.

Another aspect of the present disclosure relates to a secondary battery including a pouch for a battery, and an electrode assembly and an electrolyte solution in the pouch for a battery.

Contents relating to the film and/or the pouch for a battery may be equally applied to contents relating to the secondary battery of the present disclosure, unless otherwise specifically stated.

The electrode assembly may include, for example, a positive electrode, a negative electrode, and/or a separator. As the electrode assembly, all known electrode assemblies may be applied. The electrode assembly may be, for example, a jelly-roll type, stacked type, and/or stacked/folding type, but is not limited thereto.

The positive electrode may include, for example, a positive electrode current collector and a positive electrode active material layer. As the positive electrode current collector, for example, a thin plate of an aluminum, stainless steel, or nickel material may be used. In addition, as the positive electrode current collector, for example, a porous material with a reticular or mesh shape may be used, and a coated one with an oxidation-resistant metal or alloy film may be used to prevent oxidation. The positive electrode active material layer may include a known positive electrode active material, binder, and/or conductive material. The positive electrode active material may be, for example, a compound capable of reversible intercalation and deintercalation of lithium, and may be a lithium transition metal composite oxide containing lithium and at least one transition metal consisting of nickel, cobalt, manganese, and aluminum, without limitation. The binder may be, for example, at least one selected from the group consisting of polyvinylidene fluoride, polyvinyl alcohol, carboxymethyl cellulose, starch, hydroxypropyl cellulose, regenerated cellulose, polyvinylpyrrolidone, tetrafluoroethylene, polyethylene, polypropylene, an ethylene-propylene-diene terpolymer, styrene-butadiene rubber, and fluoro rubber, but is not limited thereto. The conductive material may be, for example, one or more selected from the group consisting of graphite, carbon black, carbon nanotubes, metal powder, and conductive oxide, but is not limited thereto.

The negative electrode may include, for example, a negative electrode current collector and a negative electrode active material layer. As the negative electrode current collector, for example, copper, stainless steel, aluminum, nickel, titanium, calcined carbon, copper or stainless steel, surface treated with carbon, nickel, titanium, silver or the like, and an aluminum-cadmium alloy may be used. In addition, fine irregularities may be formed on the surface to strengthen the bonding force with the negative electrode active material as in the positive electrode current collector, and various forms such as films, sheets, foils, nets, porous materials, foams, and non-woven materials may be used. The negative electrode active material layer may include a known negative electrode active material, binder, and/or conductive material. The negative electrode active material may be, for example, a silicon-based or carbon-based negative electrode active material. The silicon-based negative electrode active material may be, for example, at least one selected from the group consisting of SiOx (0≤x<2) particles, a Si-C composite and a Si-Y alloy (here, Y is an element selected from the group consisting of alkali metals, alkaline earth metals, transition metals, group 13 elements, group 14 elements, rare earth elements and a combination thereof). The carbon-based negative electrode active material may be, for example, one or more selected from the group consisting of artificial graphite, natural graphite, and graphitized mesocarbon microbeads, but is not limited thereto. The binder included in the negative electrode active material layer may be, for example, an aqueous binder or a rubber-based binder. The aqueous binder may be at least one selected from the group consisting of polyvinyl alcohol, polyacrylic acid, polyethylene glycol, polyacrylonitrile, polyacrylamide, carboxymethyl cellulose, and a combination thereof, which are soluble in aqueous solvents such as water, but is not limited thereto. The rubber-based binder may be, for example, at least one selected from the group consisting of styrene butadiene rubber, hydrogenated nitrile butadiene rubber, acrylonitrile butadiene rubber, acrylic rubber, butyl rubber, fluoro rubber, and a combination thereof, which do not dissolve well in aqueous solvents such as water, but are smoothly dispersed in aqueous solvents, but is not limited thereto. The conductive material included in the negative electrode active material layer may be, for example, one or more selected from the group consisting of graphite, carbon black, carbon nanotubes, metal powder, conductive oxide, and a combination thereof, but is not limited thereto.

The separator has the function of physically separating electrodes, and commonly used separators may be used without particular limitation. Particularly, a separator having low resistance to ion movement in an electrolyte solution and excellent electrolyte absorbing ability is desirable. The separator may be formed using a porous, non-conductive or insulating material, may be an independent member, or may be a coating layer added to the positive electrode and/or negative electrode. The separator may be, for example, a film formed using each of polyethylene such as high-density polyethylene, linear low-density polyethylene, low-density polyethylene and ultra-high molecular weight polyethylene, polyolefin polymers such as polypropylene, polybutylene and polypentene, or a mixture polymer thereof.

The electrolyte solution may include an organic solvent and a lithium salt. The organic solvent may use any one without particular limitations as long as it may serve as a medium through which ions relevant to the electrochemical reaction of the battery may move. The organic solvent may particularly include: ester-based solvents such as methyl acetate, ethyl acetate, γ-butyrolactone and ε-caprolactone; ether-based solvents such as dibutyl ether and tetrahydrofuran; ketone-based solvents such as cyclohexanone; aromatic hydrocarbon-based solvents such as benzene and fluorobenzene; carbonate-based solvents such as dimethyl carbonate (DMC), diethyl carbonate (DEC), methyl ethyl carbonate (MEC), ethyl methyl carbonate (EMC), ethylene carbonate (EC) and propylene carbonate (PC); alcohol-based solvents such as ethanol and isopropyl alcohol; nitriles such as R-CN (R is a C₂-C₂₀ linear, branched, or cyclic structure hydrocarbon group, and may contain a double bond aromatic ring or ether bond); amides such as dimethylformamide; dioxolane types such as 1,3-dioxolane; or sulfolane types. As the lithium salt, any compound that may provide lithium ions used in batteries may be used without particular limitations. The lithium salt may particularly include LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂. The concentration of the lithium salt may be in a range of 0.1-2.0 molar (M). If the concentration of the lithium salt is within the above range, the electrolyte solution may have appropriate conductivity and viscosity, so excellent electrolyte performance may be shown, and lithium ions may move effectively.

The secondary battery of the present disclosure may further include, for example, a venting system. The venting system is a system that irreversibly exhausts abnormally generated gas inside the battery, and known venting systems may be applied without particular limitations.

Hereinafter, the present disclosure will be explained in detail with reference to examples in order to specifically explain the disclosed contents of the present disclosure as described above and the intended actions and effects of the present disclosure. However, the examples may be modified into various other forms, and the scope of the present specification is not to be construed as being limited to the examples. It is emphasized that the examples represent the present disclosure and are provided to explain the present disclosure in more detail to those skilled in the art.

### Example 1

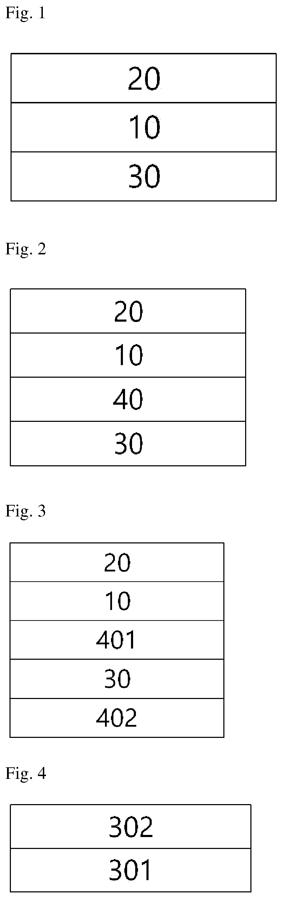

A film having a structure in which a protective layer (20), an active layer (10), a first gutter layer (401), a support layer (30) and a second gutter layer (402) are stacked in order, as in FIG. 3, was formed.

The support layer (30) was formed by casting a polymer coating layer solution to a thickness of 50 µm on a non-woven fabric (porous support, 301) of a polyester material with a thickness of 95 µm to 100 µm to form a polymer coating layer (302), and placing the cast non-woven fabric in water. In this case, the polymer coating layer solution was obtained by adding a polysulfone solid content to a N,N-dimethylformamide (DMF) solution for dissolving at 80°C to 85°C for 12 hours or more, and the content of the polysulfone solid content in the solution was 18 wt%.

Subsequently, the second gutter layer (402) was formed on one side of the support layer (30). The second gutter layer (402) was formed by applying a composition for forming a gutter layer, prepared by mixing an Isopar G solvent and polydimethylsiloxane (PDMS, Dow Corning Co., Sylgard 184) on the porous support (301) of the support layer (30), and then drying in an oven at 90°C for 5 minutes. In this case, the PDMS was included in 3 wt% based on the composition for forming the gutter layer.

Then, the first gutter layer (401) was formed on the other side of the support layer (30). The first gutter layer (401) was formed by applying a composition for forming a gutter layer, prepared by mixing an Isopar G solvent and PDMS (Dow Corning Co., Sylgard 184) on the polymer coating layer (302) of the support layer (30), and drying in an oven at 90°C for 5 minutes.

The active layer (10) was formed by applying a composition for forming an active layer, prepared by mixing distilled water, methyl cellulose, and maleic acid on the first gutter layer (401) and then drying in an oven at 90°C for 5 minutes. In this case, 1.5 wt% of methyl cellulose and 0.5 wt% of maleic acid were included based on the composition for forming the active layer. The thickness of the active layer (10) formed was 1 µm or less.

The protective layer (20) was formed by applying a composition for forming a protective layer, prepared by mixing an Isopar G solvent, poly(tetrafluoroethylene-co-2,2,4-trifluoro-5-trifluoromethoxy-1,3-dioxol) (SIGMA-ALDRICH Co., hyflon, 340.12 g/mol) and PDMS (Dow Corning Co., Sylgard 184) on one side of the active layer (10) on which the first gutter layer (401) was not formed, and then drying in an oven at 90°C for 5 minutes. In this case, with respect to the composition for forming the protective layer, poly(tetrafluoroethylene-co-2,2,4-trifluoro-5-trifluoromethoxy-1,3-dioxol) was included in 0.5 wt%, and PDMS was included in 3 wt%.

### Example 2.

A film was formed in the same manner as in Example 1, except for preparing a composition for forming a protective layer by mixing an Isopar G solvent and poly(tetrafluoroethylene-co-2,2,4-trifluoro-5-trifluoromethoxy-1,3-dioxol) (SIGMA-ALDRICH Co., hyflon, 340.12 g/mol), and including the poly(tetrafluoroethylene-co-2,2,4-trifluoro-5-trifluoromethoxy-1,3-dioxol) in 0.5 wt% relative to the composition for forming a protective layer.

### Comparative Example 1.

A film was formed in the same manner as in Example 1, except for preparing a composition for forming a protective layer by mixing an Isopar G solvent and PDMS (Dow Corning Co., Sylgard 184), and including PDMS in 3 wt% relative to the composition for forming a protective layer.

### Comparative Example 2.

A film was formed in the same manner as in Comparative Example 1, except for not forming a second gutter layer (402) on the porous support (301) of the support layer (30).

### Evaluation Example 1. Gas Permeability Properties

The gas permeability properties of the film were measured using a constant-pressure, variable-volume method, and after the permeability was stabilized (after 2 hours or more), the permeability was quantified using a gas flowmeter. More particularly, the film was fastened to a pressure cell (filter holder type), gas was applied at a certain pressure, and the flow rate of gas coming out through the film was measured. In this case, the temperature was set to room temperature, and forward direction CO₂ gas permeability properties and reverse direction air gas permeability properties were measured while changing the pressure.

**[Table 1]**

| Division | | Pressure (psi) | GPU |
|---|---|---|---|
| Example 1 | CO₂ | 50 | 19.2 |
| | | 40 | 15.7 |
| | | 20 | 7.4 |
| | Air | 60 | 0.6 |
| | | 20 | 0.1 |
| | | 15 | <0.1 |
| Example 2 | CO₂ | 50 | 18.8 |
| | | 40 | 15.2 |
| | | 20 | 7.2 |
| | Air | 60 | 0.7 |
| | | 20 | 0.2 |
| | | 15 | <0.1 |

### Evaluation Example 2. Tolerance to an Electrolyte Solution

The tolerance of the surface of the protective layer to the electrolyte solution was measured according to ASTM D5946. Particularly, 5-8 microliters (µL) of an electrolyte solution (EMC) was dropped onto the protective layers of the films of Example 2 and Comparative Example 1, and then the contact angles were measured using an OCA series optical contact angle measurement and contour analysis system. The measurement was performed 10 times for each sample, and the measurements were taken for every 25 mm.

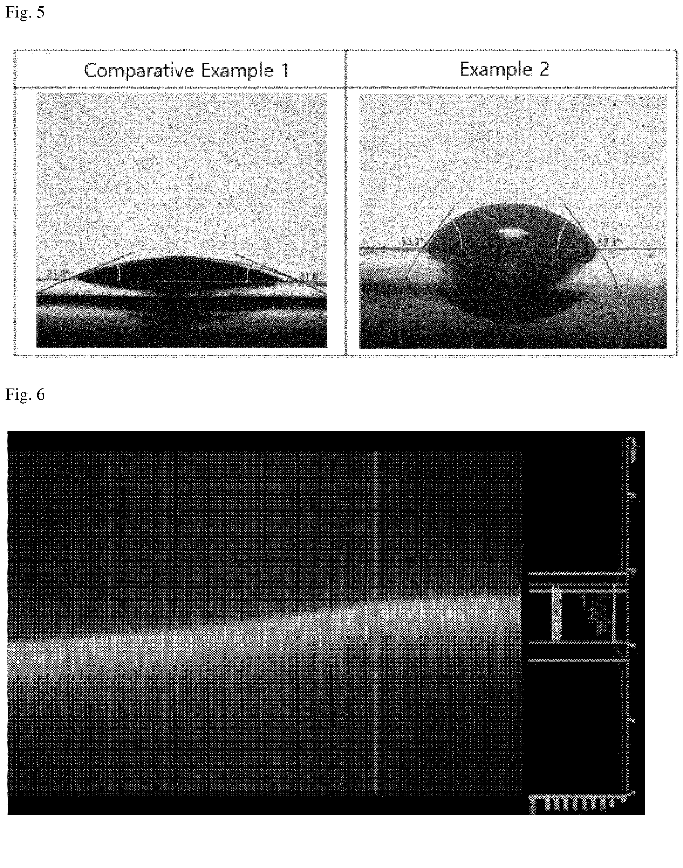

As a result, it was confirmed that the contact angles measured 10 times for the protective layer of the film of Example 2 exhibited values between 47.5° and 53.3°, and the contact angles measured 10 times for the protective layer of the film of Comparative Example 1 exhibited values between 20.1° and 21.8°. That is, it was found that in the case of the film of Example 2, having a protective layer formed from poly(tetrafluoroethylene-co-2,2,4-trifluoro-5-trifluoromethoxy-1,3-dioxol) (SIGMA-ALDRICH Co., hyflon), a large contact angle was exhibited, and no electrolyte solution impregnation phenomenon was observed even after 2 hours or more, whereas in the case of the film of Comparative Example 1, having a protective layer formed from PDMS, the contact angle was small, and the impregnation of the electrolyte solution occurred (FIG. 5).

### Evaluation Example 3. Film Structure

The depth direction (Z-axis) structure of the film was observed using a confocal laser scanning microscope (CLSM). CLSM measurement conditions were as follows.
- Device: Olympus, OLS5100,
- Light source: Laser 405 nanometers (nm), ~ 0.95 milliwatts (mW)
- Magnification: 50x
- Scan speed: 0.1-1 micrometers per second (*µ*m/s)

As a result, the protective layer, the active layer, and the first gutter layer were confirmed sequentially, but it was confirmed that at least a portion of each of the protective layer and the first gutter layer was impregnated into the active layer (FIG. 6).

### Evaluation Example 4. Water Contact Angle of Film Outermost Layer

The water contact angle of the outermost layer of the film was measured according to ASTM D5946. Particularly, 5-8 µL of water was dropped on the outermost layer of each of the films of Example 1 and Comparative Example 2 (in Example 1, the porous support part of the support layer, and in Comparative Example 2, the second gutter layer part), and then, the contact angles were measured using an OCA series optical contact angle measurement and contour analysis system. The measurement was performed 10 times for each sample, and the measurements were taken for every 25 mm.

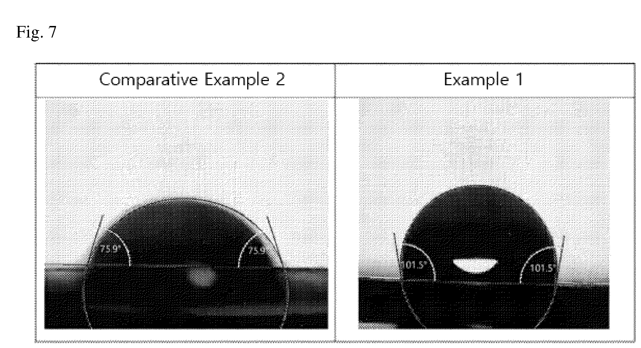

As a result, it was confirmed that the contact angles measured 10 times for the outermost layer of the film of Example 1 exhibited values between 97.0° and 101.5°, and the contact angles measured 10 times for the outermost layer of the film of Comparative Example 2 exhibited values between 75.0° and 76.9°. That is, it was found that the film of Example 1 had excellent water resistance compared to the film of Comparative Example 2 (FIG. 7).

### Evaluation Example 5. Support Layer Tensile Strength

The tensile strength of the support layers used in the Examples and Comparative Examples was measured using a universal testing machine (UTM) at a speed of 100 millimeters per minute (mm/min) for a support layer of 100 mm * 10 mm in size, and was measured for a total of 5 support layers. As a result, it was confirmed that each support layer had a tensile strength of 1.5 to 2.5 kgf/mm².

### [Explanation of symbols]

10: Active layer
20: Protective layer
30: Support layer
301: Porous support
302: Polymer coating layer
40: Gutter layer
401: First gutter layer
402: Second gutter layer

## Claims

1. A film with different gas permeability properties on both sides in order to exhaust gas generated in a secondary battery to an outside and prevent external air and water vapor from permeating into an inside of the secondary battery, wherein the film includes a protective layer, an active layer and a support layer from a side in contact with the inside of the secondary battery;
the protective layer includes an amorphous perfluorinated polymer to have a tolerance to an electrolyte solution of the secondary battery; and
under relative pressure value of 20 pound-force per square inch (psi) conditions, a ratio of a forward direction permeability of the gas generated in the secondary battery to a reverse direction permeability of air is 20 or more, where the forward direction is a direction from the inside of the secondary battery to the outside of the secondary battery, and the reverse direction is a direction from the outside of the secondary battery to the inside of the secondary battery.

2. The film according to claim 1, wherein, under relative pressure value of 20 psi conditions, the forward direction permeability of the gas generated in the secondary battery is 5 gas production unit (GPU) or more, under relative pressure value of 40 psi conditions, the forward direction permeability of the gas generated in the secondary battery is 10 GPU or more, or under relative pressure value of 50 psi conditions, the forward direction permeability of the gas generated in the secondary battery is 15 GPU or more.

3. The film according to claim 1, wherein, under relative pressure value of 15 psi conditions, the reverse direction permeability of the air is 0.1 GPU or less, under relative pressure value of 20 psi conditions, the reverse direction permeability of the air is 0.5 GPU or less, or under relative pressure value of 60 psi conditions, the reverse direction permeability of the air is 1 GPU or less.

4. The film according to claim 1, wherein the protective layer further includes at least one of polyimide, Nafion, or polydimethylsiloxane.

5. The film according to claim 1, wherein the protective layer has a contact angle with respect to the electrolyte solution of a secondary battery of 30° or more.

6. The film according to claim 1, wherein the active layer absorbs the gas generated in the secondary battery and delivers the gas to an outside direction.

7. The film according to claim 1, wherein the active layer includes a crosslinked structure of cellulose and a compound including two or more carboxylic acids.

8. The film according to claim 7, wherein the crosslinked structure of cellulose and a compound including two or more carboxylic acids is represented by a following 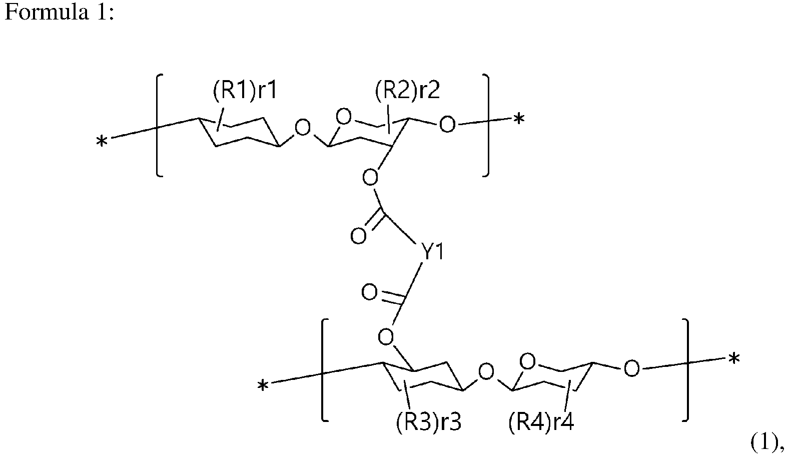 wherein:
R1 to R4 are the same or different and are each independently hydrogen, deuterium, a hydroxyl group, a substituted or unsubstituted alkyl group, or a substituted or unsubstituted alkoxy group; Y1 is a direct linkage, a substituted or unsubstituted alkylene group, a substituted or unsubstituted alkenylene group, or a substituted or unsubstituted arylene group, or a combination of substituents selected from the group consisting of a direct linkage, a substituted or unsubstituted alkylene group, a substituted or unsubstituted alkenylene group, and a substituted or unsubstituted arylene group;
r1 is an integer of from 1 to 10, where if r1 is 2 or more, R1 are the same as or different from each other;
r2 is an integer of from 1 to 7, where if r2 is 2 or more, R2 are the same as or different from each other;
r3 is an integer of from 1 to 9, where if r3 is 2 or more, R3 are the same as or different from each other; and
r4 is an integer of from 1 to 8, where if r4 is 2 or more, R4 are the same as or different from each other.

9. The film according to claim 8, wherein R1 to R4 are the same or different and are each independently a substituted or unsubstituted methyl group.

10. The film according to claim 1, wherein the support layer has a tensile strength of from 0.1 to 10 kilogram-force per square millimeter (kgf/mm²).

11. The film according to claim 1, wherein the support layer comprises a porous support.

12. The film according to claim 11, wherein the porous support has a nonwoven fabric form in which polymer fibers are irregularly entangled, a woven form or a mesh form.

13. The film according to claim 11, wherein the support layer comprises a polymer coating layer on at least one side of the porous support.

14. The film according to claim 13, wherein the polymer coating layer comprises one or more selected from the group consisting of polysulfone, polyethersulfone, polycarbonate, polyethylene oxide, polyimide, polyetherimide, polyetheretherketone, polypropylene, polymethylpentene, polymethyl chloride, polyvinylidene fluoride and a combination thereof.

15. The film according to claim 1, including a gutter layer on at least one side of the support layer.

16. The film according to claim 1, including gutter layers on both sides of the support layer.

17. The film according to claim 15 or 16, wherein each of thegutter layers independently comprises polydimethylsiloxane.

18. The film according to claim 1, wherein a water contact angle of an outermost layer of the film is from 80° to 120°, the outermost layer being in contact with the external air.

19. A pouch for a secondary battery, including the film of claim 1 in at least a portion thereof, wherein gas generated in the secondary battery is non-destructively exhausted through the film to the outside.
